# EUROPÄISCHE PATENTSCHRIFT

(11) **EP 3 300 561 B1**
(45) Veröffentlichungstag und Bekanntmachung des Hinweises auf die Patenterteilung: **17.11.2021**
(21) Anmeldenummer: 17185461.5
(22) Anmeldetag: 09.08.2017
(51) Int. Cl.: A01B 69/00, A01B 69/04

(54) **SELBSTFAHRENDE LANDWIRTSCHAFTLICHE ARBEITSMASCHINE**
SELF-PROPELLED AGRICULTURAL MACHINE
MACHINE AGRICOLE AUTOMOTRICE

(30) Priorität: 30.09.2016 DE 102016118667
(43) Veröffentlichungstag der Anmeldung: 04.04.2018
(73) Patentinhaber: CLAAS Selbstfahrende Erntemaschinen GmbH, 33428 Harsewinkel (DE)
(72) Erfinder: Krause, Thilo, 39249 Glinde (DE); Wilken, Andreas, 49143 Bissendorf (DE); Neu, Sebastian, 49196 Bad Laer (DE); Baumgarten, Joachim, 48361 Beelen (DE); Heitmann, Christoph, 48231 Warendorf (DE); Bormann, Bastian, 33334 Gütersloh (DE); Herter, Felix, 33428 Harsewinkel (DE); Bussmann, Christoph, 33428 Harsewinkel (DE); Kettelhoit, Boris, 33335 Gütersloh (DE); Vöcking, Henner, 33397 Rietberg (DE); Middelberg, René, 49080 Osnabrück (DE)
(74) Vertreter: CLAAS Gruppe

(56) Entgegenhaltungen:
- EP-A1- 2 873 315
- EP-A1- 2 954 772
- DE-A1- 19 726 917

## Beschreibung

Die vorliegende Erfindung betrifft eine selbstfahrende landwirtschaftliche Arbeitsmaschine gemäß dem Oberbegriff von Anspruch 1.

Der Begriff "selbstfahrende landwirtschaftliche Arbeitsmaschine" ist vorliegend weit zu verstehen. Darunter fallen nicht nur Erntemaschinen, wie Mähdrescher und Feldhäcksler, sondern auch Zugmaschinen wie Traktoren o. dgl..

Der effizienten Abarbeitung eines landwirtschaftlichen Arbeitsprozesses kommt heute zunehmende Bedeutung zu. Dies betrifft insbesondere bei Erntemaschinen das zielgerichtete Abfahren von Fahrspuren, um sicherzustellen, dass ein maximaler Ernteertrag erzielt wird. Gleichzeitig muss dafür gesorgt werden, dass der Feldboden durch ungünstig gewählte Fahrspuren nicht langfristig geschädigt wird. Ein Beispiel hierfür ist eine ungewünschte Bodenverdichtung. Eine Strategie zur Vermeidung ungewünschter Bodenverdichtungen besteht darin, bei der wiederholten Bearbeitung eines Feldes stets dieselben Fahrgassen zu benutzen. Zur Unterstützung des Benutzers sind Fahrerassistenzsysteme bekannt geworden, die eine sensorbasierte Spurverfolgung bereitstellen.

Die bekannte Arbeitsmaschine (DE 197 26 917 A1), von der die Erfindung ausgeht, weist ein Fahrerassistenzsystem zur Spurverfolgung auf, bei dem die Spurverfolgung auf den Sensordaten eines Laserentfernungssensors basiert. Im Einzelnen lassen sich mittels des Laserentfernungssensors Fahrgassen erfassen, denen die Arbeitsmaschine folgen soll. Für weitere Anwendungen, beispielsweise für die Ansteuerung eines Vorsatzgeräts, wird der Laserentfernungssensor zur Abtastung einer Ährenoberfläche eines Getreidefeldes benutzt.

Im Einzelnen wird bei der bekannten Arbeitsmaschine zur Spurverfolgung eine Furche oder ein Schwad mittels des Laserentfernungssensors abgetastet. Basierend auf dieser Abtastung folgt die Arbeitsmaschine der Furche oder dem Schwad, so dass vorhandene Fahrgassen zur Vermeidung der obigen, ungewünschten Bodenverdichtung immer wieder abgefahren werden. Eine Herausforderung besteht darin, die Effizienz des landwirtschaftlichen Arbeitsprozesses insgesamt durch das Abfahren vorhandener Fahrgassen nicht zu beeinträchtigen.

Der Erfindung liegt das Problem zugrunde, die bekannte selbstfahrende landwirtschaftliche Arbeitsmaschine derart auszugestalten und weiterzubilden, dass die Effizienz bei der Abarbeitung des landwirtschaftlichen Arbeitsprozesses, insbesondere im Hinblick auf das Abfahren vorhandener Fahrgassen, gesteigert wird.

Vorschlagsgemäß wird zunächst davon ausgegangen, dass die Arbeitsmaschine eine Umfelddetektionseinrichtung zur sensorischen Erfassung des Umfelds der Arbeitsmaschine aufweist. Dabei dient die Umfelddetektionseinrichtung unter anderem der Versorgung eines Fahrerassistenzsystems mit Sensordaten. Das Fahrerassistenzsystem dient nicht nur der Ansteuerung der Arbeitsorgane, sondern auch der Führung der Arbeitsmaschine auf einer imaginären Fahrspur. Dieses Führen der Arbeitsmaschine kann automatisiert oder aber über die Ausgabe von Führungsanweisungen an den Benutzer erfolgen.

Wesentlich ist nun, dass die Umfelddetektionseinrichtung einen Laserscanner aufweist, der das Umfeld der Arbeitsmaschine in der Weise scannt, dass das Fahrerassistenzsystem aus den Sensordaten eine vorhandene, insbesondere vor der Arbeitsmaschine liegende Fahrgasse ermittelt und die Arbeitsmaschine darauf basierend in die Fahrgasse führt, wobei das Fahrerassistenzsystem aus den Sensordaten mindestens eine charakteristische Gutbestands-Eigenschaft ermittelt und basierend auf einem vorbestimmten Zusammenhang zwischen Fahrgasse und Gutbestands-Eigenschaft mindestens ein Arbeitsorgan ansteuert.

Mit der vorschlagsgemäßen Lösung ist es erstmals vorgesehen, beim Abfahren vorhandener Fahrgassen auch Gutbestands-Eigenschaften zu berücksichtigen. Dies trägt dem Umstand Rechnung, dass ein starres Abfahren vorhandener Fahrgassen möglicherweise zu einer im Hinblick auf den Arbeitsprozess nicht optimalen Positionierung der Arbeitsmaschine im Gutbestand führt. Die Berücksichtigung eines vorbestimmten Zusammenhangs zwischen der Fahrgasse und der Gutbestands-Eigenschaft ermöglicht eine Ansteuerung der Arbeitsorgane derart, dass sich dennoch ein optimierter Arbeitsprozess einstellen kann. Ein Beispiel hierfür ist ein geringfügiges, jedoch ungewünschtes Herausfahren der Arbeitsmaschine aus dem Gutbestand, was auf die Führung der Arbeitsmaschine in der bestehenden Fahrgasse zurückgehen kann. Dem kann durch eine entsprechende Ansteuerung eines Fahrantriebs der Arbeitsmaschine dadurch Rechnung getragen werden, dass die Fahrgeschwindigkeit erhöht wird, so dass trotz des geringfügigen Herausfahrens der Arbeitsmaschine aus dem Gutbestand keine nennenswerte Beschränkung der Effizienz des landwirtschaftlichen Arbeitsprozesses auftritt.

Wie oben angesprochen, kann gemäß Anspruch 2 das Führen der Arbeitsmaschine automatisiert oder aber teilautomatisiert unter Heranziehung des Benutzers ablaufen. Es ist auch denkbar, dass sich der automatisierte Betrieb und der teilautomatisierte Betrieb abwechseln. In beiden Fällen lässt sich die Effizienz bei der Abarbeitung des landwirtschaftlichen Arbeitsprozesses mit vergleichsweise einfachen Mitteln erhöhen.

Bei einer besonders bevorzugten Ausgestaltung ist ein Steuerprozess vorgesehen, in dem eine Soll-Fahrspur nach einer Fahrspurstrategie basierend auf der ermittelten Fahrgasse und der ermittelten Gutbestands-Eigenschaft bestimmt wird. Mit der grundsätzlichen Möglichkeit der Heranziehung der ermittelten Fahrgasse einerseits und der ermittelten Gutbestands-Eigenschaft andererseits bei der Bestimmung der Soll-Fahrspur ergibt sich eine hohe Zuverlässigkeit bei der Bestimmung der Soll-Fahrspur auch bei ggf. unzuverlässigen Sensordaten. Es ergibt sich grundsätzlich aber auch die Möglichkeit, die Soll-Fahrspur entweder ausschließlich basierend auf der ermittelten Fahrgasse oder ausschließlich basierend auf der ermittelten Gutsbestand-Eigenschaft zu bestimmen. Dies ist insbesondere für den bevorzugten Fall zutreffend, in dem es sich bei der ermittelten Gutbestands-Eigenschaft um eine Bestandskante des Gutsbestands handelt.

Entsprechend wird vorgeschlagen, dass für den Fall, dass eine Fahrgasse nicht ermittelbar ist, nunmehr eine Soll-Fahrspur basierend auf einer ermittelten Bestandskante des Gutbestands bestimmt wird. Hier zeigt sich der besondere Vorteil der Austauschbarkeit von Fahrgasse und Gutbestands-Eigenschaft als Datengrundlage für die Bestimmung der Soll-Fahrspur.

Die weiter bevorzugten Ausgestaltungen gemäß den Ansprüchen 5 und 6 betreffen die Ermittlung charakteristischer Gutbestands-Eigenschaften aus geometrischen Gutbestands-Merkmalen bzw. die Ermittlung charakteristischer Boden-Eigenschaften aus geometrischen Boden-Merkmalen. Damit wird klargestellt, dass aus geometrischen Merkmalen wie Linien, Kreisen und Flächen, die sich durch die Umfelddetektionseinrichtung erfassen lassen, entsprechende Eigenschaften ableiten lassen. Bei der hier bevorzugten Gutbestands-Eigenschaft handelt es sich um die Existenz und Lage einer Bestandskante, während es sich bei der hier bevorzugten Boden-Eigenschaft um die Existenz und Lage einer vorhandenen, insbesondere vor der Arbeitsmaschine liegenden Fahrgasse handelt.

Der vorschlagsgemäße, vorbestimmte Zusammenhang zwischen Fahrgasse und Gutbestands-Eigenschaft kann auf ganz unterschiedliche Weise definiert sein. Bei der bevorzugten Ausgestaltung gemäß Anspruch 7 handelt es sich bei dem vorbestimmten Zusammenhang um eine vorbestimmte Entfernung zwischen der ermittelten Fahrgasse und einer Lage der ermittelten charakteristischen Gutbestands-Eigenschaft. Eine solche Entfernung lässt sich basierend auf den Sensordaten des Laserscanners, bei denen es sich stets um Entfernungsdaten handelt, durch einfache Berechnung ermitteln.

Bei der besonders bevorzugten Ausgestaltung gemäß Anspruch 8 handelt es sich bei dem vorbestimmten Zusammenhang um eine vorbestimmte Entfernung zwischen der ermittelten Fahrgasse und einer Lage einer ermittelten Bestandskante im Gutbestand. Dadurch lässt sich auf einfache Weise die zukünftige, noch zu erläuternde Teilbreite der Arbeitsmaschine ermitteln.

Die weiter bevorzugten Ausgestaltungen gemäß den Ansprüchen 9 bis 13 betreffen eine Konstellation, bei der die Arbeitsmaschine das zu bearbeitende Feld je nach Arbeitsprozesssituation nur über eine Teilbreite ihrer maximalen Arbeitsbreite bearbeitet. Dies kann beispielsweise dadurch entstehen, dass, wie oben angesprochen, die Arbeitsmaschine geringfügig aus dem Gutbestand herausfährt. Aus dem vorschlagsgemäßen, vorbestimmten Zusammenhang zwischen Fahrgasse und Gutbestands-Eigenschaft ergibt sich die Möglichkeit, diese Teilbreite vorausschauend zu ermitteln, so dass basierend auf dieser zukünftigen Teilbreite mindestens ein Arbeitsorgan der Arbeitsmaschine angesteuert werden kann (Anspruch 10). Damit lässt sich auf einfache Weise die Effizienz bei der Abarbeitung des landwirtschaftlichen Arbeitsprozesses aufrechterhalten, selbst wenn die Arbeitsmaschine, wie oben angesprochen, geringfügig aus dem Feldbestand herausfährt.

Im Folgenden wird die Erfindung anhand einer lediglich ein Ausführungsbeispiel darstellenden Zeichnung näher erläutert. In der Zeichnung zeigt:
- Fig. 1: eine vorschlagsgemäße selbstfahrende landwirtschaftliche Arbeitsmaschine in einem Vorgewendebereich vor der Abarbeitung eines landwirtschaftlichen Arbeitsprozesses bei einer ersten Feldkonstellation in einer Ansicht von oben,
- Fig. 2: die landwirtschaftliche Arbeitsmaschine gemäß Fig. 1 bei einer zweiten Feldkonstellation und

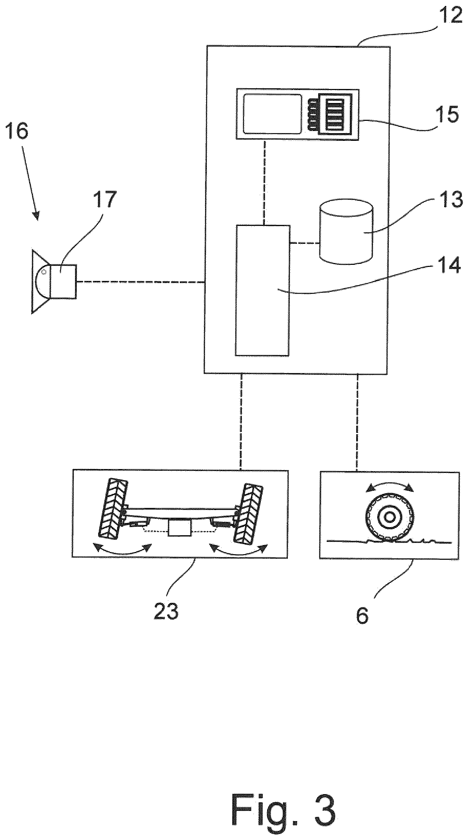

- Fig. 3: den grundsätzlichen Aufbau des Fahrerassistenzsystems der landwirtschaftlichen Arbeitsmaschine mit einer Reihe daran angeschlossener Komponenten gemäß Fig. 1.

Die vorschlagsgemäße Lösung lässt sich auf einen weiten Bereich selbstfahrender landwirtschaftlicher Arbeitsmaschinen, insbesondere auf Erntemaschinen, anwenden. Dazu gehören Mähdrescher, Feldhäcksler, Zugmaschinen, insbesondere Traktoren, o. dgl.. Bei dem dargestellten und insoweit bevorzugten Ausführungsbeispiel handelt es sich bei der Arbeitsmaschine 1 um einen Mähdrescher, der in an sich üblicher Weise mit einem Vorsatzgerät 2 ausgestattet ist. Die Breite des Vorsatzgeräts 2 quer zu der Längsachse 3 der Arbeitsmaschine 1 definiert hier die maximale Arbeitsbreite 4 der Arbeitsmaschine 1. Alle Ausführungen zu einem Mähdrescher gelten für alle anderen Arten von Arbeitsmaschinen entsprechend.

Die landwirtschaftliche Arbeitsmaschine 1 dient der Abarbeitung eines landwirtschaftlichen Arbeitsprozesses durch ein Abfahren von Fahrspuren 5a,b. Für den Fall, dass es sich wie im dargestellten Ausführungsbeispiel bei der Arbeitsmaschine 1 um einen Mähdrescher handelt, läuft während der Abarbeitung des landwirtschaftlichen Arbeitsprozesses in der Arbeitsmaschine 1 ein Ernteverarbeitungsprozess, der einen Dreschprozess beinhaltet.

Die vorschlagsgemäße Arbeitsmaschine 1 ist mit mindestens einem Arbeitsorgan 6 ― 11 ausgestattet. Eine als Mähdrescher ausgestaltete Arbeitsmaschine 1 weist vorzugsweise die Arbeitsorgane Fahrantrieb 6, Schneidwerk 7, Dreschwerk 8, Abscheidevorrichtung 9, Reinigungsvorrichtung 10 und Verteilvorrichtung 11 auf. Dabei ist die Arbeitsmaschine 1 mit einem Fahrerassistenzsystem 12 zur Ansteuerung der Arbeitsorgane 6 ― 11 ausgestattet.

Das Fahrerassistenzsystem 12 weist einen Speicher 13 zum Hinterlegen von Daten, eine Rechenvorrichtung 14 zur Verarbeitung der in dem Speicher 13 hinterlegten Daten und eine graphische Benutzerschnittstelle 15 zur Benutzereingabe und -ausgabe von Daten auf. Vorschlagsgemäß führt das Fahrerassistenzsystem 12 die Arbeitsmaschine 1 auf einer Fahrspur 5a,b basierend auf den Sensordaten einer Umfelddetektionseinrichtung 16. Das Führen der Arbeitsmaschine 1 kann in noch zu erläuternder Weise automatisiert oder teilautomatisiert erfolgen.

Wesentlich ist nun, dass die Umfelddetektionseinrichtung 16 einen Laserscanner 17 aufweist, der das Umfeld der Arbeitsmaschine 1 scannt. Bei einem solchen Laserscanner handelt es sich vorzugsweise um einen Laserentfernungssensor, dessen Messstrahl innerhalb eines Erfassungsbereichs auslenkbar ist. Der Erfassungsbereich kann eine zweidimensionale Ebene oder aber einen dreidimensionalen Bereich umfassen. Das Scannen mittels des Laserscanners erfolgt vorzugsweise derart, dass der Messstrahl periodisch nach einer vorbestimmten Auslenkstrategie ausgelenkt wird. Währenddessen wird die Entfernung des Laserscanners zu dem jeweiligen Auftreffpunkt des Messstrahls ermittelt. Für den strukturellen Aufbau des Laserscanners sind zahlreiche Varianten bekannt.

Vorschlagsgemäß scannt der Laserscanner 17 das Umfeld der Arbeitsmaschine 1 in der Weise, dass das Fahrerassistenzsystem 12 aus den Sensordaten eine im Feld vorhandene, insbesondere vor der Arbeitsmaschine 1 liegende Fahrgasse 18 ermittelt und die Arbeitsmaschine 1 darauf basierend in die Fahrgasse 18 führt. Von besonderer Bedeutung dabei ist die Tatsache, dass das Fahrerassistenzsystem 12 aus den Sensordaten mindestens eine geometrische Gutbestands-Eigenschaft ermittelt und basierend auf einem vorbestimmten Zusammenhang zwischen Fahrgasse 18 und Gutbestands-Eigenschaft mindestens ein Arbeitsorgan 6 ― 11 ansteuert. Wie im allgemeinen Teil der Beschreibung erläutert worden ist, lässt sich damit die Effizienz bei der Abarbeitung des Arbeitsprozesses steigern. Dies wird weiter unten im Detail erläutert.

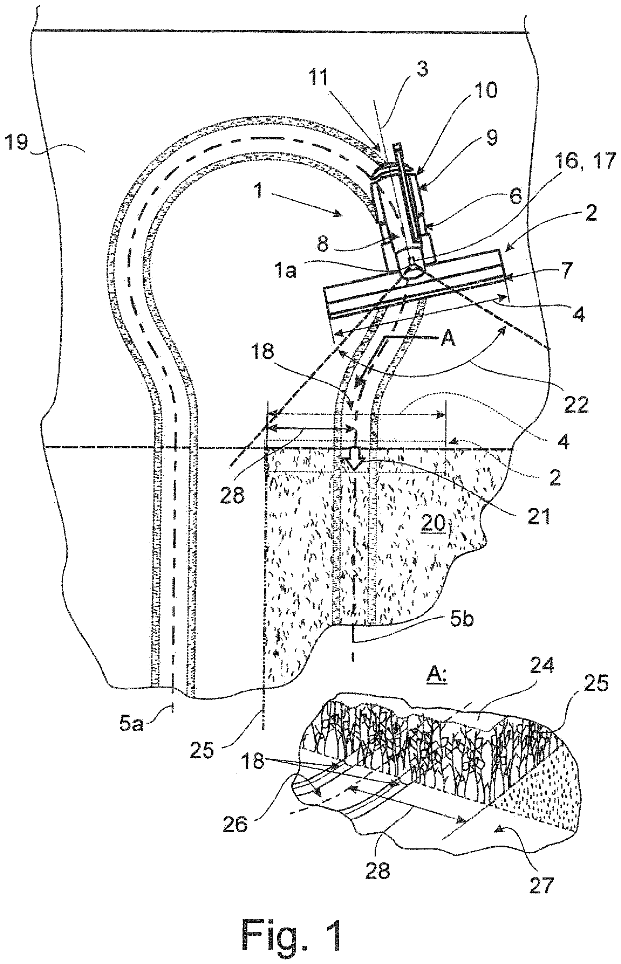

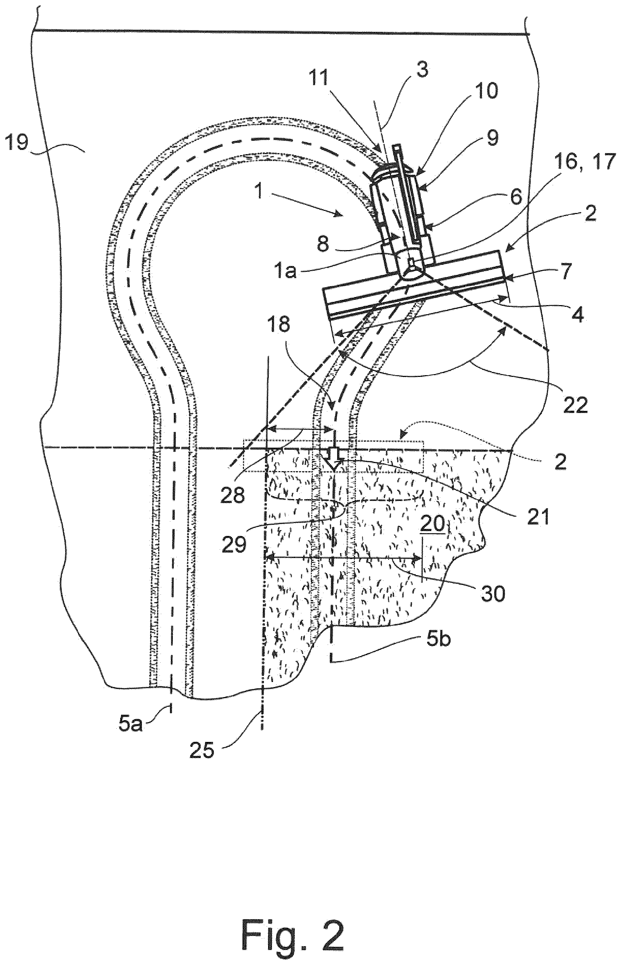

Die vorschlagsgemäße Lösung ist besonders vorteilhaft anwendbar in den in Fig. 1 und 2 dargestellten Situationen, in denen sich die Arbeitsmaschine 1, hier der Mähdrescher, in einem Vorgewendebereich 19 befindet. In einer solchen Situation geht es darum, das Anschneiden des Gutbestands 20 in für den Arbeitsprozess optimaler Weise vorzunehmen. Die vorschlagsgemäße Lösung lässt sich aber auch vorteilhaft während der Abarbeitung des landwirtschaftlichen Arbeitsprozesses, also während sich die Arbeitsmaschine 1 im Gutbestand 20 befindet, anwenden. Dann geht es darum, einer ermittelten Soll-Fahrspur 21 wiederum im Hinblick auf einen optimalen landwirtschaftlichen Arbeitsprozess zu folgen. Wie schon angedeutet, kann das Fahrerassistenzsystem 12 die landwirtschaftliche Arbeitsmaschine 1 automatisiert oder nur halbautomatisiert führen. Im erstgenannten Fall weist die Arbeitsmaschine 1 neben dem Fahrantrieb 6 ein automatisches Lenksystem 23 auf, wobei das Fahrerassistenzsystem 12 den Fahrantrieb 6 und das Lenksystem 23 basierend auf den Sensordaten der Umfelddetektionseinrichtung 16 automatisch ansteuert. Damit ist die Bewegungsführung der Arbeitsmaschine 1 voll automatisiert möglich. Alternativ oder zusätzlich kann es vorgesehen sein, dass das Fahrerassistenzsystem 12 Führungsanweisungen betreffend die Führung der Arbeitsmaschine 1 in die Fahrgasse 18 über die Benutzerschnittstelle 15 ausgibt. Sofern der Benutzer diesen Führungsanweisungen folgt, resultiert wiederum eine Führung der Arbeitsmaschine 1 in die Fahrgasse 18. Grundsätzlich können die automatisierte Bewegungsführung und die teilautomatisierte Bewegungsführung miteinander gekoppelt werden, wie weiter oben erläutert worden ist.

Bei dem dargestellten und insoweit bevorzugten Ausführungsbeispiel ist es so, dass sich der Erfassungsbereich lediglich in Fahrtrichtung der landwirtschaftlichen Arbeitsmaschine 1 erstreckt.

Grundsätzlich kann sich der Erfassungsbereich 22 alternativ oder zusätzlich quer zu der Fahrtrichtung und weiter alternativ oder zusätzlich entgegen der Arbeitsmaschine 1 erstrecken.

Hier und vorzugsweise weist die Umfelddetektionseinrichtung 16 einen einzigen Sensor, nämlich den Laserscanner 17 auf. Durch den vergleichsweise großen Erfassungsbereich 22 des Laserscanners 17 lässt sich die vorschlagsgemäße Lösung hiermit in vollem Umfange kostengünstig umsetzen.

Der optimalen Anordnung des Laserscanners 17 kommt für die Erzielung guter Erfassungsergebnisse besondere Bedeutung zu. Vorzugsweise ist der Laserscanner im Bereich einer Längsachse 3 der Arbeitsmaschine 1 angeordnet. Ferner ist der Laserscanner 17 vorzugsweise in einem oberen Bereich der Arbeitsmaschine 1, hier und vorzugsweise auf der Fahrerkabine 1a der Arbeitsmaschine 1 angeordnet, wodurch sich speziell bodenspezifische Merkmale gut detektieren lassen. Alternativ kann der Laserscanner 17 aber auch auf dem Vorsatzgerät 2 oder an anderer Stelle der Arbeitsmaschine 1 angeordnet sein.

Zwar steht vorliegend die Erfassung einer Fahrgasse 18 und das anschließende Führen der Arbeitsmaschine 1 in die Fahrgasse 18 die wesentliche Rolle. Allerdings ist es für die Effizienz des Arbeitsprozesses gleichermaßen wichtig, die abzufahrenden Fahrspuren 5a,b insgesamt optimal zu planen. Hierfür ist es vorgesehen, dass das Fahrerassistenzsystem 12 in einem Steuerprozess eine Soll-Fahrspur 21 nach einer Fahrspurstrategie basierend auf der ermittelten Fahrgasse 18 und der ermittelten Gutbestands-Eigenschaft bestimmt. Interessant dabei ist die Tatsache, dass für den Fall, dass eine Fahrgasse 18 nicht ermittelbar ist, nunmehr eine Soll-Fahrspur 21 basierend auf einer Gutbestands-Eigenschaft, insbesondere basierend auf einer ermittelten Bestandskante 23, bestimmt wird. Dadurch ergibt sich eine besonders zuverlässige Ermittlung der Soll-Fahrspur 21, selbst wenn eine Fahrgasse 18 nicht ermittelbar ist. Dies kann beispielsweise der Fall sein, wenn die Fahrgasse 18 als solche durch den Gutbestand 20 verdeckt ist.

Für die Ermittlung der Gutbestands-Eigenschaften sind verschiedene Varianten denkbar. Hier und vorzugsweise ist es so, dass das Fahrerassistenzsystem 12 aus den Sensordaten der Umfelddetektionseinrichtung 16 geometrische Gutbestands-Merkmale, insbesondere das Höhenprofil 24 des Gutbestands 20, die Bestandsdichte und/oder die Bestandsdichteverteilung ermittelt und dass das Fahrerassistenzsystem 12 aus den Gutbestands-Merkmalen charakteristische Gutbestands-Eigenschaften ermittelt. Bei den Gutbestands-Eigenschaften kann es sich um die Existenz und Lage einer oben angesprochenen Bestandskante 25, um die Existenz und Lage einer Pflegefahrgasse oder um die Existenz und Lage einer Lagerstelle im Gutbestand 20 handeln. Andere Varianten für die zu ermittelnden charakteristischen Gutbestands-Eigenschaften sind denkbar.

Eine ähnliche Situation ergibt sich hinsichtlich der Ermittlung der charakteristischen Boden-Eigenschaften. Hier und vorzugsweise ermittelt das Fahrerassistenzsystem 12 aus den Sensordaten der Umfelddetektionseinrichtung 16 geometrische Boden-Merkmale, insbesondere die Bodentopologie 26, des Feldbodens. Aus diesem Boden-Merkmalen ermittelt das Fahrerassistenzsystem 12 schließlich die charakteristischen Boden-Eigenschaften, insbesondere die Existenz und Lage einer vor der Arbeitsmaschine 1 liegenden Fahrgasse 8.

Der vorschlagsgemäße, vorbestimmte Zusammenhang zwischen Fahrgasse 18 und Gutbestands-Eigenschaft ist vorzugsweise eine vorbestimmte Entfernung 28 zwischen der ermittelten Fahrgasse 18 und einer Lage der ermittelten geometrischen Gutbestands-Eigenschaft, bei der es sich in besonders bevorzugter Ausgestaltung um die oben angesprochene Bestandskante 25 im Gutbestand 20 handelt. Die Entfernung 28 ist hier und vorzugsweise eine Entfernung quer zu der Längserstreckung der ermittelten Bestandskante 25 im Gutbestand 20. Dies ist besonders vorteilhaft für den Fall, dass der vorbestimmte Zusammenhang eine Teilbreite der landwirtschaftlichen Arbeitsmaschine 1 betrifft, wie im Folgenden erläutert wird. Dabei wird davon ausgegangen, dass die Arbeitsmaschine 1 das zu bearbeitende Feld je nach Arbeitsprozesssituation nur über eine Teilbreite 29 ihrer maximalen Arbeitsbreite 4 bearbeitet, wobei das Fahrerassistenzsystem 12 aus dem vorbestimmten Zusammenhang eine zukünftige Teilbreite 30 für die Arbeitsmaschine 1 vorausschauend ermittelt. Fig. 1 zeigt den Fall, bei dem die Lage der vorhandenen Fahrgasse 18 die volle Ausnutzung der maximalen Arbeitsbreite 4 erlaubt. Der Grund hierfür besteht darin, dass die obige Entfernung 28 gerade der halben maximalen Arbeitsbreite 4 der Arbeitsmaschine 1 entspricht. Dies ergibt sich aus der mit punktierter Linie angedeuteten Darstellung des Vorsatzgeräts 2 der gerade in den Gutbestand 20 einfahrenden Arbeitsmaschine 1.

Anders ist die Situation bei der in Fig. 2 dargestellten Feldkonstellation. Hier ist die Entfernung 28 kleiner als die halbe maximale Arbeitsbreite 4 der Arbeitsmaschine 1. Der punktierten Darstellung gemäß Fig. 2 lässt sich entnehmen, dass die Arbeitsmaschine 1 nur noch über eine oben angesprochene Teilbreite 29 in bearbeitendem Eingriff mit dem Gutbestand 20 ist. Auch wenn hierdurch ein Teil des Vorsatzgeräts 2, insbesondere des Schneidwerks 7, gewissermaßen leer läuft, kann diese Situation genutzt werden, um die Fahrgeschwindigkeit zu erhöhen, ohne die Arbeitsmaschine 1 zu überlasten. Insoweit lässt sich ein übermäßiges Absinken der Effizienz bei der Abarbeitung des landwirtschaftlichen Arbeitsprozesses vermeiden.

Ganz allgemein ist es also so, dass das Fahrerassistenzsystem 12 mindestens ein Arbeitsorgan 6 - 11, vorzugsweise den Fahrantrieb 6, basierend auf der ermittelten, zukünftigen Teilbreite 30 ansteuert. Die zukünftige Teilbreite 30 ergibt sich, wie oben erläutert, aus der zuvor ermittelten Entfernung 28.

Im Einzelnen wird vorgeschlagen, dass das Fahrerassistenzsystem 12 den Fahrantrieb 6 basierend auf der ermittelten, zukünftigen Teilbreite 30 derart ansteuert, dass mit abnehmender Teilbreite 30 die Vorfahrtgeschwindigkeit ansteigt. Dies trägt den obigen Überlegungen zur Effizienz bei der Abarbeitung des landwirtschaftlichen Arbeitsprozesses Rechnung.

Grundsätzlich kann es auch vorgesehen sein, dass das Fahrerassistenzsystem 12 ein Schneidwerk 7, hier das Schneidwerk 7 des Mähdreschers, basierend auf der ermittelten, zukünftigen Teilbreite 29 ansteuert. Die teilbreitenbasierte Ansteuerung anderer Arbeitsorgane 6 ― 11 ist denkbar.

Der Wert der jeweiligen Teilbreite 29 kann je nach Anwendungsfall Einfluss auf unterschiedliche Arbeitsorgane 6 ― 11 haben. Für den Fall, dass es sich bei der Arbeitsmaschine 1 um einen Traktor handelt, kann das betreffende Arbeitsorgan ein Abgabesystem, insbesondere ein Samenabgabesystem oder ein Düngerabgabesystem, sein. Für diesen Fall ist es vorzugsweise vorgesehen, dass das Fahrerassistenzsystem 12 das Abgabesystem basierend auf der ermittelten, zukünftigen Teilbreite derart ansteuert, dass eine entsprechende Abgabe, insbesondere eine entsprechende Abgabe von Samen oder Dünger, nur über die Teilbreite 29 der Arbeitsmaschine 1 erfolgt. Damit lässt sich die Effizienz bei der Abarbeitung des landwirtschaftlichen Arbeitsprozesses optimieren.

Es darf zusammengefasst werden, dass sich mit der vorschlagsgemäßen Nutzung eines vorbestimmten Zusammenhangs zwischen Fahrergasse 18 und Gutbestands-Eigenschaft die Effizienz bei der Abarbeitung des landwirtschaftlichen Arbeitsprozesses optimieren lässt. Für den Fall, dass aus dem vorbestimmten Zusammenhang eine zukünftige Teilbreite 30 für die Arbeitsmaschine 1 ermittelt wird, ist eine besonders genaue Ermittlung einer durch den dargestellten Mähdrescher abgeernteten Fläche möglich, was wiederum bei der Ansteuerung der Arbeitsorgane 6 ― 11 der Arbeitsmaschine 1 von dem Fahrerassistenzsystem 12 berücksichtigt werden kann.

### Bezugszeichenliste

- 1: Arbeitsmaschine
- 2: Vorsatzgerät
- 3: Längsachse
- 4: max. Arbeitsbreite
- 5a,b: Fahrspuren
- 6 ― 11: Arbeitsorgane
- 12: Fahrerassistenzsystem
- 13: Speicher
- 14: Rechenvorrichtung
- 15: Benutzungsschnittstelle
- 16: Umfelddetektionseinrichtung
- 17: Laserscanner
- 18: Fahrgasse
- 19: Vorgewendebereich
- 20: Gutbestand
- 21: Soll-Fahrspur
- 22: Erfassungsbereich
- 23: Lenksystem
- 24: Höhenprofil Gutbestand
- 25: Bestandskante
- 26: Bodentopologie
- 27: Feldboden
- 28: Entfernung
- 29: Teilbreite
- 30: Zukünftige Teilbreite

## Patentansprüche

1. Selbstfahrende landwirtschaftliche Arbeitsmaschine, insbesondere Erntemaschine, zur Abarbeitung eines landwirtschaftlichen Arbeitsprozesses durch ein Abfahren von Fahrspuren (5a,b), mit mehreren Arbeitsorganen (6 - 11) und mit einem Fahrerassistenzsystem (12) zur Ansteuerung der Arbeitsorgane (6 - 11), wobei das Fahrerassistenzsystem (12) die Arbeitsmaschine (1) auf einer Fahrspur (5a,b) basierend auf den Sensordaten einer Umfelddetektionseinrichtung (16) führt,
**dadurch gekennzeichnet,**
**dass** die Umfelddetektionseinrichtung (16) einen Laserscanner (17) aufweist, der das Umfeld der Arbeitsmaschine (1) in der Weise scannt, dass das Fahrerassistenzsystem (12) aus den Sensordaten eine vorhandene Fahrgasse (18) ermittelt und die Arbeitsmaschine (1) darauf basierend in die Fahrgasse (18) führt und dass das Fahrerassistenzsystem (12) aus den Sensordaten mindestens eine charakteristische Gutbestands-Eigenschaft ermittelt und basierend auf einem vorbestimmten Zusammenhang zwischen Fahrgasse (18) und Gutbestands-Eigenschaft mindestens ein Arbeitsorgan (6 - 11) ansteuert.

2. Selbstfahrende landwirtschaftliche Arbeitsmaschine nach Anspruch 1, **dadurch gekennzeichnet, dass** ein Fahrantrieb (6) und ein automatisches Lenksystem vorgesehen sind und dass das Fahrerassistenzsystem (12) den Fahrantrieb (6) und das Lenksystem (23) basierend auf den Sensordaten automatisch ansteuert, und/oder, dass das Fahrerassistenzsystem (12) eine Benutzerschnittstelle (15) aufweist und dass das Fahrerassistenzsystem (12) Führungsanweisungen betreffend die Führung der Arbeitsmaschine (1) in die Fahrgasse (18) über die Benutzerschnittstelle (15) ausgibt.

3. Selbstfahrende landwirtschaftliche Arbeitsmaschine nach Anspruch 1 oder 2, **dadurch gekennzeichnet, dass** der Laserscanner (17) einen Erfassungsbereich (22) aufweist, der sich in Fahrtrichtung und/oder quer zu der Fahrtrichtung und/oder entgegen der Fahrtrichtung der Arbeitsmaschine 1 erstreckt.

4. Selbstfahrende landwirtschaftliche Arbeitsmaschine nach einem der vorhergehenden Ansprüche, **dadurch gekennzeichnet, dass** der Laserscanner (17) im Bereich einer Längsachse (6 - 11) der Arbeitsmaschine (1) angeordnet ist.

5. Selbstfahrende landwirtschaftliche Arbeitsmaschine nach einem der vorhergehenden Ansprüche, **dadurch gekennzeichnet, dass** das Fahrerassistenzsystem (12) aus den Sensordaten geometrische Gutbestands-Merkmale, insbesondere das Höhenprofil (24) des Gutbestands (20), die Bestandsdichte und/oder die Bestandsdichteverteilung, ermittelt und dass das Fahrerassistenzsystem (12) aus den Gutbestands-Merkmalen charakteristische Gutbestands-Eigenschaften, insbesondere die Existenz und Lage einer Bestandskante (25) oder die Existenz und Lage einer Pflegefahrgasse oder die Existenz und Lage einer Lagerstelle im Gutbestand (20) ermittelt.

6. Selbstfahrende landwirtschaftliche Arbeitsmaschine nach einem der vorhergehenden Ansprüche, **dadurch gekennzeichnet, dass** das Fahrerassistenzsystem (12) aus den Sensordaten geometrische Boden-Merkmale, insbesondere die Bodentopologie, des Feldbodens (27) ermittelt, und dass das Fahrerassistenzsystem (12) aus den Boden-Merkmalen charakteristische Boden-Eigenschaften, insbesondere die Existenz und Lage einer vorhandenen Fahrgasse (18), ermittelt.

7. Selbstfahrende landwirtschaftliche Arbeitsmaschine nach einem der vorhergehenden Ansprüche, **dadurch gekennzeichnet, dass** der vorbestimmte Zusammenhang eine vorbestimmte Entfernung (28) zwischen der ermittelten Fahrgasse (18) und einer Lage der ermittelten geometrischen Gutbestands-Eigenschaft ist.

8. Selbstfahrende landwirtschaftliche Arbeitsmaschine nach einem der vorhergehenden Ansprüche, **dadurch gekennzeichnet, dass** der vorbestimmte Zusammenhang eine vorbestimmte Entfernung (28) zwischen der ermittelten Fahrgasse (18) und einer Lage einer ermittelten Bestandskante (25) im Gutbestand (20) ist.

9. Selbstfahrende landwirtschaftliche Arbeitsmaschine nach einem der vorhergehenden Ansprüche, **dadurch gekennzeichnet, dass** die Arbeitsmaschine (1) das zu bearbeitende Feld je nach Arbeitsprozesssituation nur über eine Teilbreite (29) ihrer maximalen Arbeitsbreite (4) bearbeitet und dass das Fahrerassistenzsystem (12) aus dem vorbestimmten Zusammenhang eine zukünftige Teilbreite (30) für die Arbeitsmaschine (1) vorausschauend ermittelt.

10. Selbstfahrende landwirtschaftliche Arbeitsmaschine nach einem der vorhergehenden Ansprüche, **dadurch gekennzeichnet, dass** das Fahrerassistenzsystem (12) mindestens ein Arbeitsorgan (6 - 11) basierend auf der ermittelten, zukünftigen Teilbreite (30) ansteuert.

11. Selbstfahrende landwirtschaftliche Arbeitsmaschine nach einem der vorhergehenden Ansprüche, **dadurch gekennzeichnet, dass** das Fahrerassistenzsystem (12) den Fahrantrieb (6) basierend auf der ermittelten, zukünftigen Teilbreite (30) derart ansteuert, dass mit abnehmender Teilbreite (29) die Vorfahrtgeschwindigkeit ansteigt.

12. Selbstfahrende landwirtschaftliche Arbeitsmaschine nach einem der vorhergehenden Ansprüche, **dadurch gekennzeichnet, dass** das Fahrerassistenzsystem (12) ein Schneidwerk (7) basierend auf der ermittelten, zukünftigen Teilbreite (30) ansteuert.

13. Selbstfahrende landwirtschaftliche Arbeitsmaschine nach einem der vorhergehenden Ansprüche, **dadurch gekennzeichnet, dass** ein Arbeitsorgan ein Abgabesystem, insbesondere ein Samenabgabesystem oder ein Düngerabgabesystem, ist und dass das Fahrerassistenzsystem (12) das Abgabesystem basierend auf der ermittelten, zukünftigen Teilbreite derart ansteuert, dass eine entsprechende Abgabe nur über die Teilbreite der Arbeitsmaschine (1) erfolgt.

## Claims

1. A self-propelled agricultural working machine, in particular a harvester, for implementing an agricultural working process by driving on travel lanes (5a, b) with a plurality of working members (6 - 11) and a driver assist system (12) for actuating the working members (6 - 11), wherein the driver assist system (12) guides the working machine (1) on a travel lane (5a, b) based on the sensor data of a surroundings detection device (16),
**characterised in that**
the surroundings detection device (16) has a laser scanner (17) which scans the surroundings of the working machine (1) in such a way that the drive assist system (12) ascertains an existing tramline (18) from the sensor data and guides the working machine (1) based thereon into the tramline (18) and that the driver assist system (12) ascertains at least one characteristic crop stand property from the sensor data and actuates at least one working member (6 - 11) based on a predetermined relationship between the tramline (18) and the crop stand property.

2. A self-propelled agricultural working machine according to claim 1 **characterised in that** there are provided at travel drive (6) and an automatic steering system and that the driver assist system (12) automatically actuates the travel drive (6) and the steering system (23) based on the sensor data and/or that the driver assist system (12) has a user interface (15) and that the driver assist system (12) outputs guidance instructions concerning guidance of the working machine (1) into the tramline (18) by way of the user interface (15).

3. A self-propelled agricultural working machine according to claim 1 or claim 2 **characterised in that** the laser scanner (17) has a detection region which extends in the travel direction and/or transversely to the travel direction and/or in opposite relationship to the travel direction of the working machine (1).

4. A self-propelled agricultural working machine according to one of the preceding claims **characterised in that characterised in that** the laser scanner (17) is arranged in the region of a longitudinal axis (6 - 11) of the working machine (1).

5. A self-propelled agricultural working machine according to one of the preceding claims **characterised in that** the driver assist system (12) ascertains from the sensor data geometrical crop stand features, in particular the height profile (14) of the crop stand (20), the stand density and/or the stand density distribution and that the driver assist system (12) ascertains from the crop stand features characteristic crop stand properties, in particular the existence and position of a stand edge (25) or the existence and position of a maintenance tramline or the existence and position of a storage location in the crop stand (20).

6. A self-propelled agricultural working machine according to one of the preceding claims **characterised in that** the driver assist system (12) ascertains from the sensor data geometrical ground features, in particular the ground topology, of the field ground (27), and that the driver assist system (12) ascertains from the ground features characteristic ground properties, in particular the existence and position of an existing tramline (18).

7. A self-propelled agricultural working machine according to one of the preceding claims **characterised in that** the predetermined relationship is a predetermined distance (28) between the ascertained tramline (18) and a position of the ascertained geometrical crop stand property.

8. A self-propelled agricultural working machine according to one of the preceding claims **characterised in that** the predetermined relationship is a predetermined distance (28) between the ascertained tramline (18) and a position of an ascertained stand edge (25) in the crop stand (20).

9. A self-propelled agricultural working machine according to one of the preceding claims **characterised in that** the working machine (1) works the field to be worked depending on the respective working process situation only over a partial width (29) of its maximum working width (4) and the driver assist system (12) proactively ascertains from the predetermined relationship a future partial width (20) for the working machine (1).

10. A self-propelled agricultural working machine according to one of the preceding claims **characterised in that** the driver assist system (12) actuates at least one working member (6 - 11) based on the ascertained future partial width (30).

11. A self-propelled agricultural working machine according to one of the preceding claims **characterised in that** the driver assist system (12) actuates the travel drive (6) based on the ascertained future partial width (30) in such a way that the forward travel speed increases with decreasing partial width (29).

12. A self-propelled agricultural working machine according to one of the preceding claims **characterised in that** the driver assist system (12) actuates a cutting mechanism (7) based on the ascertained future partial width (30).

13. A self-propelled agricultural working machine according to one of the preceding claims **characterised in that** a working member is a delivery system, in particular a seed delivery system or a fertiliser delivery system and that the driver assist system (12) actuates the delivery system based on the ascertained future partial width in such a way that a corresponding delivery takes place only over the partial width of the working machine (1).

## Revendications

1. Machine de travail agricole automotrice, en particulier machine de récolte, pour exécuter un processus de travail agricole en parcourant des traces de roulement (5a,b), comprenant plusieurs organes de travail (6-11) et comprenant un système d'assistance à la conduite (12) pour agir sur les organes de travail (6-11), le système d'assistance à la conduite (12) guidant la machine de travail (1) sur une trace de roulement (5a,b) sur la base des données de capteur d'un équipement de détection d'environnement (16), **caractérisée en ce que** l'équipement de détection d'environnement (16) comporte un scanner à laser (17) qui balaie l'environnement de la machine de travail (1), de façon que le système d'assistance à la conduite (12) détermine à partir des données de capteur une allée de roulement existante (18) et guide la machine de travail (1) vers l'allée de roulement (18) en se basant sur celles-ci, et **en ce que** le système d'assistance à la conduite (12) détermine à partir des données de capteur au moins une propriété de culture de produit caractéristique et agit sur au moins un organe de travail (6-11) sur la base d'un rapport prédéterminé entre allée de roulement (18) et propriété de culture de produit.

2. Machine de travail agricole automotrice selon la revendication 1, **caractérisée en ce qu'**un groupe propulseur (6) et un système de direction automatique sont prévus, et **en ce que** le système d'assistance à la conduite (12) agit automatiquement sur le groupe propulseur (6) et sur le système de direction (23) sur la base des données de capteur, et/ou **en ce que** le système d'assistance à la conduite (12) comporte une interface utilisateur (15) et **en ce que**, par l'intermédiaire de l'interface utilisateur (15), le système d'assistance à la conduite (12) délivre des consignes de guidage relatives au guidage de la machine de travail (1) vers l'allée de roulement (18).

3. Machine de travail agricole automotrice selon la revendication 1 ou 2, **caractérisée en ce que** le scanner à laser (17) comporte une zone de couverture (22) qui s'étend dans le sens de la marche et/ou transversalement au sens de marche et/ou à l'opposé du sens de la marche de la machine de travail 1.

4. Machine de travail agricole automotrice selon une des revendications précédentes, **caractérisée en ce que** le scanner à laser (17) est disposé dans la zone d'un axe longitudinal (6-11) de la machine de travail (1).

5. Machine de travail agricole automotrice selon une des revendications précédentes, **caractérisée en ce que**, à partir des données de capteur, le système d'assistance à la conduite (12) détermine des caractéristiques de culture de produit géométriques, en particulier le profil de hauteur (24) de la culture de produit (20), la densité de culture et/ou la répartition de densité de culture, et **en ce que**, à partir des caractéristiques de culture de produit, le système d'assistance à la conduite (12) détermine des propriétés de culture de produit caractéristiques, en particulier l'existence et la position d'un bord de culture (25) ou l'existence et la position d'une allée de service ou l'existence et la position d'une zone de verse dans la culture de produit (20).

6. Machine de travail agricole automotrice selon une des revendications précédentes, **caractérisée en ce que**, à partir des données de capteur, le système d'assistance à la conduite (12) détermine des caractéristiques de sol géométriques, en particulier la topologie de sol, du sol de champ (27), et **en ce que**, à partir des caractéristiques de sol, le système d'assistance à la conduite (12) détermine des propriétés de sol caractéristiques, en particulier l'existence et la position d'une allée de roulement existante (18).

7. Machine de travail agricole automotrice selon une des revendications précédentes, **caractérisée en ce que** le rapport prédéterminé est une distance prédéterminée (28) entre l'allée de roulement déterminée (18) et une position de la caractéristique de culture de produit géométrique déterminée.

8. Machine de travail agricole automotrice selon une des revendications précédentes, **caractérisée en ce que** le rapport prédéterminé est une distance prédéterminée (28) entre l'allée de roulement déterminée (18) et une position d'un bord de culture déterminé (25) dans la culture de produit (20).

9. Machine de travail agricole automotrice selon une des revendications précédentes, **caractérisée en ce que**, selon la situation du processus de travail, la machine de travail (1) ne traite le champ à traiter que sur une largeur partielle (29) de sa largeur de travail maximale (4), et **en ce que**, à partir du rapport prédéterminé, le système d'assistance à la conduite (12) détermine par anticipation une largeur partielle future (30) pour la machine de travail (1).

10. Machine de travail agricole automotrice selon une des revendications précédentes, **caractérisée en ce que** le système d'assistance à la conduite (12) agit sur au moins un organe de travail (6-11) sur la base de la largeur partielle future déterminée (30).

11. Machine de travail agricole automotrice selon une des revendications précédentes, **caractérisée en ce que** le système d'assistance à la conduite (12) agit sur le groupe propulseur (6) sur la base de la largeur partielle future déterminée (30), de façon que la vitesse d'avancement augmente à mesure que la largeur partielle (29) diminue.

12. Machine de travail agricole automotrice selon une des revendications précédentes, **caractérisée en ce que** le système d'assistance à la conduite (12) agit sur un tablier de coupe (7) sur la base de la largeur partielle future déterminée (30).

13. Machine de travail agricole automotrice selon une des revendications précédentes, **caractérisée en ce qu'**un organe de travail est un système d'apport de semence ou un système d'apport d'engrais, et **en ce que** le système d'assistance à la conduite (12) agit sur le système d'apport sur la base de la largeur partielle future déterminée, de façon qu'un apport correspondant n'ait lieu que sur la largeur partielle de la machine de travail (1).
